# EUROPEAN PATENT SPECIFICATION

(11) **EP 0 518 917 B1**
(45) Date of publication and mention of the grant of the patent: **02.10.1996**
(21) Application number: 91905167.2
(22) Date of filing: 01.03.1991
(51) Int. Cl.: B25B 31/00, F16B 21/18, A01K 37/00

(54) **FASTENING DEVICES AND APPLICATOR**
BEFESTIGUNGSMITTEL UND GERÄT ZUM ANBRINGEN DERSELBEN
DISPOSITIFS DE FIXATION ET APPLICATEUR

(30) Priority: 03.03.1990 GB 9004806
(43) Date of publication of application: 23.12.1992
(60) Divisional application: 96103486.5
(73) Proprietor: Edgar, Martin Frank, Yarrowford, Selkirk TD7 5LZ (GB)
(72) Inventor: EADIE, Brian, Kenneth, MacGregor, Galderglen Mill, Renfrewshire PA12 4DH (GB); AGAR, Ian, Cadgersloan, Lochgreen Road, Stirlingshire FK4 2EU (GB)
(74) Representative: Pacitti, Pierpaolo A.M.E.
(86) International application number: GB9100320
(87) International publication number: WO9113726

(56) References cited:
- EP-A- 0 226 525
- CH-A- 478 636
- DE-A- 3 219 427
- FR-A- 2 611 564
- GB-A- 2 049 531
- US-A- 2 573 942
- US-A- 2 718 050
- US-A- 2 741 829
- US-A- 3 066 304

## Description

This invention relates to a device for the application of fastening members and is particularly but not exclusively concerned with an applicator for beak bits.

Game birds, such as Pheasants and Partridges, when bred in captivity, have a tendency to fight. Attacks take the form of feather-pecking and can eventually lead, if blood is drawn, to cannibalism.

Since their introduction in the late 1960's anti-pecking devices called beak bits have been used to discourage and prevent feather-pecking. Originally manufactured from metal and formed in the shape of a 'C', they had to be fitted into the bird's beaks with a pair of pliers used to squeeze the ends of the beak bit into a location in each nostril cavity. This operation was slow, and completely manual. It was necessary to pick up a beak bit, then load it to the pliers. A bird would then have to be held in one hand while the assembly of beak bit and pliers is held in the other.

Subsequently plastic beak bits have been introduced for the same anti-pecking purpose. They can be applied by hand using a developed technique. However, it remains a painstaking job because the beak bits are supplied in a 'loose' fashion, and have to be individually selected from a bundle, before the application. They are stretched open to allow each end of the clip to be located into the nostril, and to this end circlip-pliers are often used to assist in this operation. The beak bits themselves are manufactured in the main from soft plastic to allow easy deformation by hand.

Each of the above versions of anti-pecking systems, namely metal or plastic beak bits, has its own advantages and disadvantages. However they both have the fundamental drawback in that they are completely manual systems. The time taken to treat each bird is stressful for the animals in particular, and disagreeable for the person. Automation is highly desirable, and an aim of this invention is to make the application of anti-pecking beak bits or similar fastening members more efficient. The invention relates particularly to an applicator for anti-peck devices manufactured from a plastic material.

A device according to the preamble of claim 1 is known from, for example, US-A-2573942.

According to the present invention there is provided a device for the application of fastening members, including the features of claim 1.

Preferably, said assembly is biased towards said retracted position by resilient bias means.

Preferably also, said actuating member is connected to said first jaw member and extends therefrom through a slot in the side of said housing.

The device preferably also includes locking means for locking said assembly in its extended position.

Preferably, the device is adapted for use with generally C-shaped fastening members, the outer ends of said jaw members each being provided with a shoulder having an upstanding projection formed thereon.

Embodiments of the invention will now be described, by way of example only, with reference to the accompanying drawings, in which:-
Fig 1 is a side view of an applicator device embodying the invention;
Fig 2 is a plan view of the device of Fig 1;
Fig 3 is a plan view of the interior of one of two identical shell halves forming part of the device of Fig 1;
Fig 4 shows a second jaw member of the device of Fig 1;
Fig 5 shows a first jaw member of the device of Fig 1;
Fig 6 is a plan view of the device of Fig 1 with its magazine and one shell half removed, showing the jaw members in the retracted position;
Fig 7 is a view similar to that of Fig 6, with the jaw members in their extended position;
Figs 8, 9 and 10 are perspective views illustrating the use of the device of Figs 1 to 7;
Fig 11 is a plan view of the first type of beak bit suitable for use with the invention;
Fig 12 is a plan view of a second type of beak bit suitable for use with the invention; and
Fig 13 is a perspective view of a stack of beak bits suitable for use with the invention.

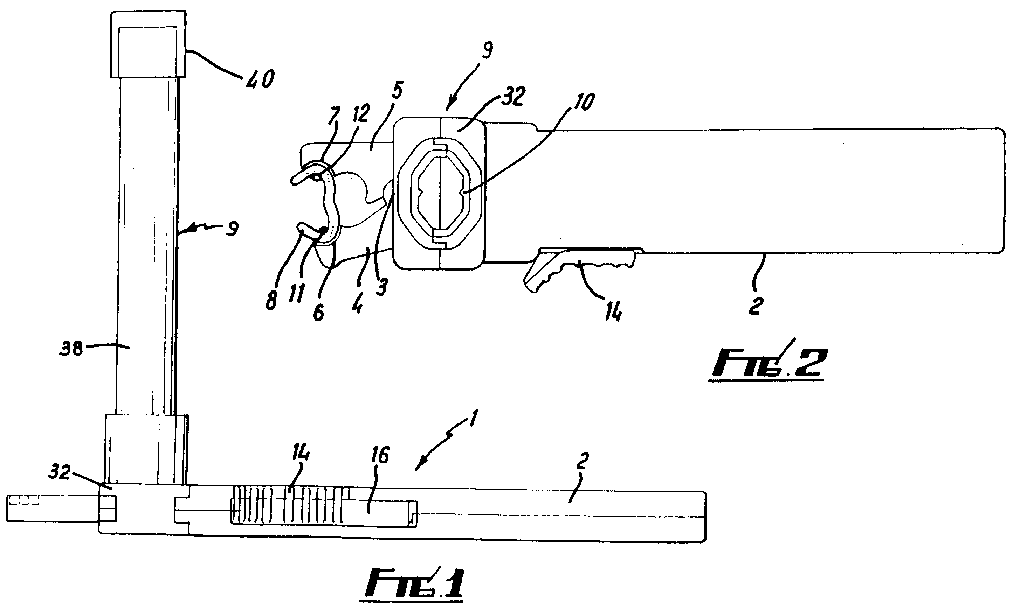

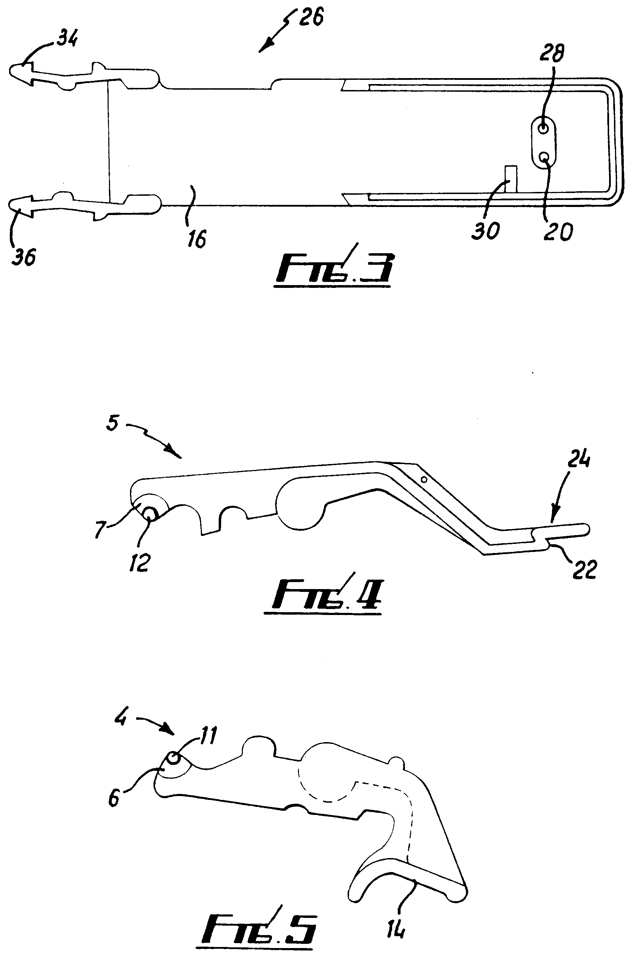

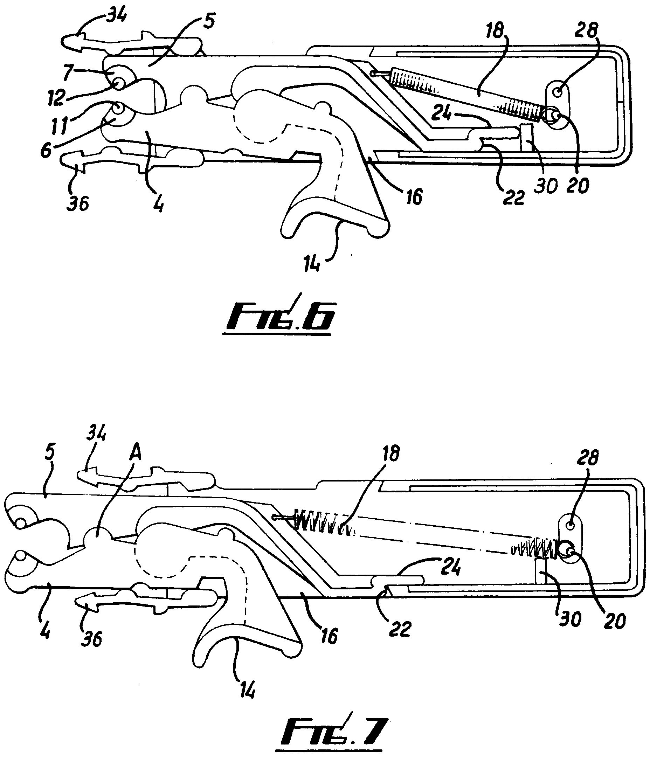

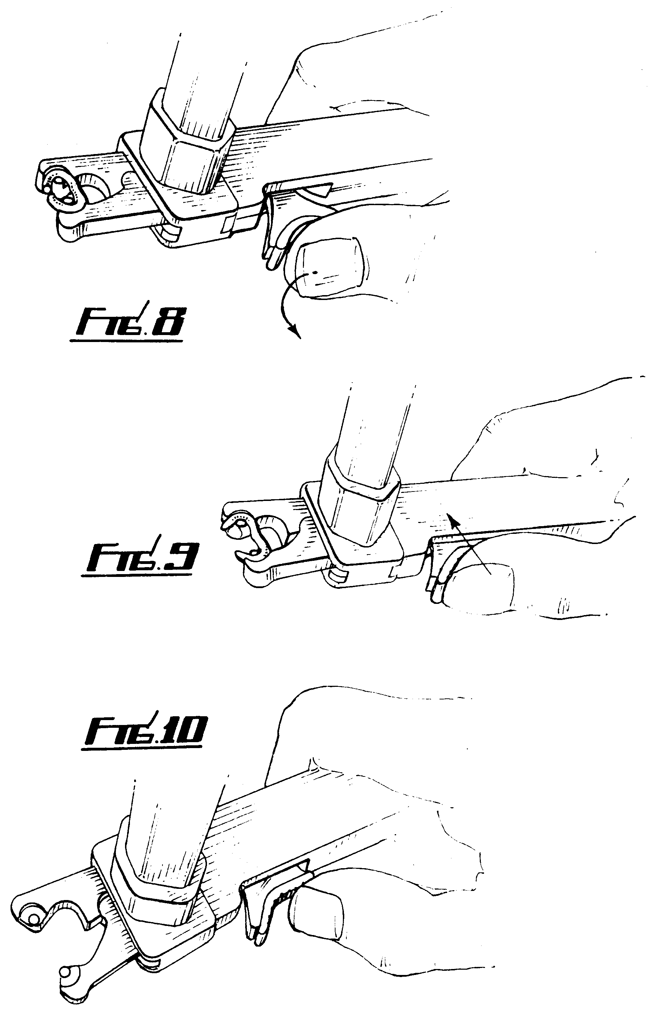

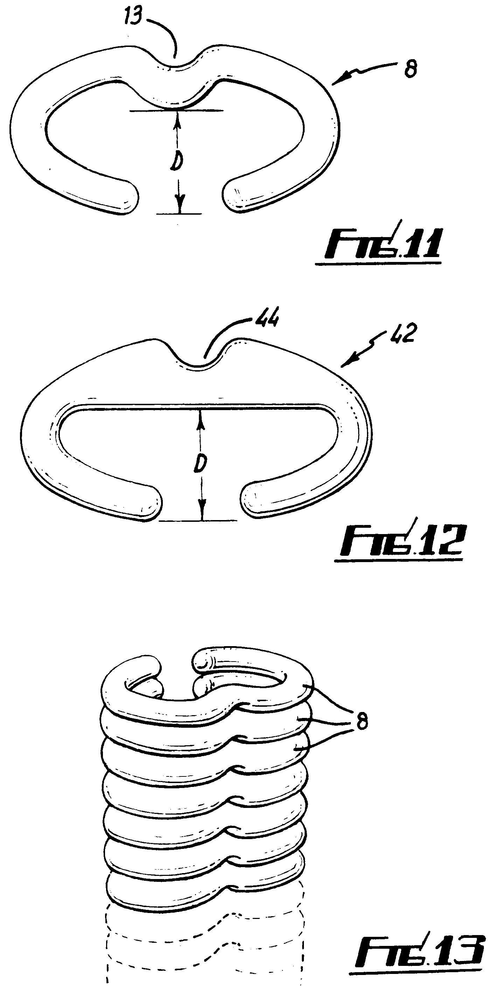

Referring to the drawings, a bit applicator in accordance with the invention comprises an elongate housing 1, part of which forms a handle 2. The housing 1 contains a slidably mounted assembly 3 comprising first and second pivotably connected jaw members 4 and 5.

An elongate tubular magazine 9 is connected to the forward end of the housing 1, and is adapted to store a stack of generally C-shaped bits 8.

The forward ends of the jaw members 4 and 5 are formed with opposed arcuate shoulders 6 and 7 having upstanding projections or pins 11 and 12 formed thereon.

The assembly 3 is slidable along the long axis of the housing between a retracted position, wherein the jaws 4 and 5 are closed and the shoulders 6 and 7 are aligned with the magazine 9. In the extended position, the jaws 4 and 5 are pivotable between a closed and an open position. In this embodiment of the invention the jaws do not meet when "closed" so as not to impinge upon the bird's beak during application of a bit. Both the sliding motion of the assembly 3 and the pivotal motion of the jaws 4 and 5 are controlled by thumb pressure on an actuating member 14 which is formed integrally with the first jaw member 4 and which extends through a slot 16 extending lengthwise along one side of the handle 2.

The assembly 3 is biased towards its retracted position by a coil spring 18 or other resilient member, which is this example is connected between the second jaw member 5 and a pin 20 formed in the interior of the handle 2 towards the rear end thereof.

With the assembly 3 in its retracted position, the closed jaws 4 and 5 receive the bottom-most bit 8 of the stack in the magazine 9. The bit rests on the shoulders 6 and 7 with the projections 11 and 12 located inside the arcs of its "upper" and "lower" limbs. In the retracted position, the actuating member 14 is located at the rear-most end of the slot 16. By applying thumb pressure to the actuating member, the assembly 3 is slid forward against the biasing force of the spring 18 into its extended position, carrying the bit 8 with it. The assembly locks automatically in its extended position by means of a shoulder 22, formed in a tail portion 24 of the second jaw member 5 extending rearwardly within the housing 1 alongside the spring 18, which engages the rear-most end of the slot 16. The spring 18 is disposed at an angle to the long axis of the housing 1 so as to exert a transverse bias force (in addition to the main longitudinal bias force) urging the tail portion 24 towards the side of the handle 2 in which the slot 16 is formed.

In the extended position, the jaws 4 and 5 may be opened (pivoting about knuckle-joint A), spreading the limbs of the bit, by thumb pressure on the actuating member 14. The bit is thus opened and held securely under tension during the application procedure. Once the bit 8 has been applied, the assembly 3 is unlocked by thumb pressure on the actuating member 14, disengaging the shoulder 22 from the slot 16, and returns to its retracted, closed position to receive another bit 8 from the magazine 9. The loading, and re-loading of the jaws 4 and 5 is thus performed automatically, and the spreading and application of the bit 8 is achieved by simple manipulation of the actuating member 14.

In the preferred embodiment of the invention, the housing 1 is formed from two identical shell halves 26, each including co-operating pins 20 and recesses 28, and lugs 30, one of which provides a stop member against which the tail 24 of the second jaw member 5 abuts when the assembly 3 is retracted.

The magazine 9 preferably comprises a collar portion 32 which is a removable snap-fit onto first and second flexible prongs 34 and 36 extending forwardly from the front ends of the shell halves 26 on either side thereof. The tubular body 38 of the magazine 9 extends from the collar 32 substantially at right-angles to the pivot plane of the jaws 4 and 5, and has its upper end closed by a cap 40.

The housing 1, jaw members 4 and 5 and magazine 9 are suitably formed from moulded plastics.

The bits 8 themselves are generally C-shaped and each includes an indentation 13 formed at the middle of the "outside" of the central arc interconnecting the limbs of the C-shape.

In the example shown in Fig 11, the indentation is provided by forming a kink in the C-shaped bit formed from a rod of resilient plastic material. Fig 12 shows an alternative bit in which the central arc of the C-shape is thickened in the plane of the bit 42, the indentation 44 being formed in the thickened portion.

In both these cases, the indentations 13 and 44 co-operate with a correspondingly shaped ridge 10 extending along one side of the tube 38 of the magazine 9, which assists in correctly locating and guiding the movement of the bits. The indentations also serve to make the bits more suitable for use with young birds by reducing the internal dimension D of the bit. In the case of Fig 12, the interior surface of the thickened portion will be worn away over time by the action of the bird's beak, and will thus adapt its size as the bird grows, thereby extending the useful life of the bit. In the case of Fig 11, the kink formed in the bit enhances its resilient properties.

The bits are preferably formed in a frangibly connected serial stack (Fig 13), such that a large number of bits can be handled and loaded into the magazine as a single unit. Forward movement of the assembly 3 from its retracted position detaches the lowermost bit from the stack. The stack may be fed through the magazine into the jaws 4 and 5 simply by gravity, but is preferably resiliently biased by means of a spring-loaded plunger or the like in a manner which will be apparent to those of ordinary skill in the art.

Figs 8, 9 and 10 are perspective views illustrating the operation of the applicator showing, respectively, the jaws extended and closed, with a bit in place, the jaws extended and partially open, spreading the bit, and extended and fully open, after application of the bit.

The invention has been described herein with particular reference to the application of beak bits for game birds. However, it will be understood that it may equally be used in the application of the same or similar bits or fasteners for other purposes. Thus, the invention provides a means whereby the control, accuracy and speed with which beak bits or other fasteners may be applied are enhanced.

Modifications and improvements may be incorporated without departing from the scope of the invention as defined by the claims.

## Claims

1. A device for the application of fastening members (8), including first and second pivotable jaw members (4,5) each having an outer end adapted to receive and retain a fastening member between said jaws, the jaws being pivotal between a closed position and an open position wherein the shape of said fastening member (8) is altered to facilitate its application;
characterised in that:
said device comprises a housing (1) including a handle portion (2), an assembly comprising said first and second jaw members (4,5) and slidably located within said housing (10), said assembly being slidable between a retracted position wherein said jaws (4,5) are closed for receiving a fastening member (8), and an extended position wherein said jaws (4,5) can be pivoted between the closed position and the open position, said device further including manually operable actuating means (14) for effecting the sliding movement of said assembly and for effecting the pivoting movement of the jaws (4,5) in the extended position of the assembly, and a magazine (9) adapted to hold a plurality of said fastening members (8) and to position said members (8) for loading into said jaws (4,5) when said assembly is in its retracted position.

2. The device of Claim 1, wherein said magazine (9) includes a collar portion (32) which is detachably connected to a forward end of said housing (1), and an elongate tubular body (38) extending from said collar (32) substantially at right angles to the pivot plane of said jaws (4,5).

3. The device of Claim 2, wherein said tubular body (38) has a ridge (10) extending along the length of its interior and adapted to co-operate with corresponding indentations formed in the fastening members (8).

4. The device of Claim 2 or claim 3, wherein said collar portion (32) is a snap-fit with first and second flexible prongs (34,36) extending from said forward end of said housing (1).

5. The device of any preceding Claim, wherein said assembly is biased towards its retracted position by resilient bias means (18).

6. The device of Claim 5, wherein said resilient bias means (18) comprises an elongate resilient member having a first end attached to said second jaw member (5) and a second end attached to the interior of said housing (1).

7. The device of any preceding Claim, wherein said actuating member (14) is connected to said first jaw member (4) and extends therefrom through a slot (16) in the side of said housing (1).

8. The device of Claim 7, wherein said actuating member (14) is adapted to be operated by the thumb of a hand grasping the handle portion (2).

9. The device of any preceding Claim, including locking means (22) for locking said assembly in said extended position.

10. The device of Claim 9, wherein said locking means (22) may be released, when locked, by operation of said actuating member (14).

11. The device of Claim 9 or Claim 10, wherein said locking means (22) comprises a tail portion (24) of said second jaw member (5) extending rearwardly inside the housing (1) and adapted to engage a co-operating part of said housing (1) when said assembly is in said extended position.

12. The device of any preceding Claim, adapted for use with generally C-shaped fastening members (8), wherein the outer ends of said jaw members (4,5) are each provided with a shoulder (6,7) having an upstanding projection thereon.

## Patentansprüche

1. Vorrichtung für die Anbringung von Befestigungskörpern (8), welche erste und zweite schwenkbare Klauenkörper (4, 5) aufweist, von welchen jeder ein äußeres Ende hat, das zur Aufnahme und zum Halten eines Befestigungskörpers zwischen den Klauen angepaßt ist, wobei die Klauen zwischen einer geschlossenen Stellung und einer offenen Stellung schwenkbar sind, wobei die Form des Befestigungskörpers (8) zur Erleichterung seiner Anbringung geändert wird,
dadurch gekennzeichnet, daß
die Vorrichtung aus einem Gehäuse (1) besteht, das einen Griffteil (2) und eine Baugruppe aufweist, welche aus den ersten und zweiten Klauenkörpern (4, 5) besteht und innerhalb des Gehäuses (10) verschiebbar angeordnet ist, wobei die Baugruppe zwischen einer zurückgezogenen Position, in welcher die Klauen (4, 5) für die Aufnahme eines Befestigungskörpers (8) geschlossen sind, und einer ausgestreckten Position verschieblich ist, in welcher die Klauen (4, 5) zwischen der geschlossenen Stellung und der offenen Stellung geschwenkt werden können, wobei die Vorrichtung weiterhin eine manuell betätigbare Betätigungseinrichtung (14) zum Bewirken der Verschiebebewegung der Baugruppe und zum Bewirken der Schwenkbewegung der Klauen (4, 5) in der ausgestreckten Position der Baugruppe aufweist, sowie ein Magazin (9), welches zum Halten einer Vielzahl der Befestigungskörper (8) angepaßt ist, sowie zu einer Positionierung der Körper (8) für ein Einladen in die Klauen (4, 5), wenn sich die Baugruppe in ihrer zurückgezogenen Position befindet.

2. Vorrichtung nach Anspruch 1, bei welcher das Magazin (9) einen Bundteil (32) aufweist, der mit einem vorderen Ende des Gehäuses (1) abnehmbar verbunden ist, sowie einen länglichen rohrförmigen Körper (38), der von dem Bund (32) im wesentlichen rechtwinklig zu der Schwenkebene der Klauen (4, 5) verläuft.

3. Vorrichtung nach Anspruch 2, bei welcher der rohrförmige Körper (38) eine Rippe (10) hat, die entlang seines Innenraums verläuft und für ein Zusammenwirken mit entsprechenden Vertiefungen angepaßt ist, die in den Befestigungskörpern (8) ausgebildet sind.

4. Vorrichtung nach Anspruch 2 oder Anspruch 3, bei welcher der Bundteil (32) ein Schnappsitz ist mit ersten und zweiten flexiblen Krallen (34, 36), die von dem vorderen Ende des Gehäuses (1) verlaufen.

5. Vorrichtung nach einem der vorhergehenden Ansprüche, bei welcher die Baugruppe gegen ihre zurückgezogene Position durch eine elastisch-biegsame Vorspanneinrichtung (18) vorgespannt ist.

6. Vorrichtung nach Anspruch 5, bei welcher die elastischbiegsame Vorspanneinrichtung (18) aus einem länglichen, elastisch-biegsamen Körper besteht, der mit einem ersten Ende an dem zweiten Klauenkörper (5) befestigt ist und mit einem zweiten Ende an dem Innenraum des Gehäuses (1) befestigt ist.

7. Vorrichtung nach einem der vorhergehenden Ansprüche, bei welcher der Betätigungskörper (14) mit dem ersten Klauenkörper (4) verbunden ist und von diesem durch einen Schlitz (16) in der Seite des Gehäuses (1) hindurch verläuft.

8. Vorrichtung nach Anspruch 7, bei welcher der Betätigungskörper (14) für eine Betätigung durch den Daumen einer Hand angepaßt ist, welche den Griffteil (2) erfaßt.

9. Vorrichtung nach einem der vorhergehenden Ansprüche, welche eine Verriegelungseinrichtung (12) zum Verriegeln der Baugruppe in der ausgestreckten Position aufweist.

10. Vorrichtung nach Anspruch 9, bei welcher die Verriegelungseinrichtung (22) im verriegelten Zustand durch eine Betätigung des Betätigungskörpers (14) gelöst werden kann.

11. Vorrichtung nach Anspruch 9 oder Anspruch 10, bei welcher die Verriegelungseinrichtung (22) aus einem hinteren Teil (24) des zweiten Klauenkörpers (5) besteht, der nach hinten in das Innere des Gehäuses (1) verläuft und für einen Eingriff mit einem zusammenwirkenden Teil des Gehäuses (1) angepaßt ist, wenn sich die Baugruppe in der ausgestreckten Position befindet.

12. Vorrichtung nach einem der vorhergehenden Ansprüche, die zur Verwendung mit generell C-förmigen Befestigungskörpern (8) angepaßt ist, wobei die äußeren Enden der Klauenkörper (4, 5) jeweils mit einer Schulter (6, 7) versehen sind, die mit einem aufrechten Vorsprung versehen ist.

## Revendications

1. Dispositif pour l'application d'éléments de fixation (8), comprenant des premier et second éléments de mâchoire pivotants (4, 5) ayant chacun une extrémité extérieure adaptée pour recevoir et retenir un élément de fixation entre lesdites mâchoires, les mâchoires étant pivotantes entre une position fermée et une position ouverte de façon que la forme dudit élément de fixation (8) est modifiée pour faciliter son application ;
caractérisé en ce que :
ledit dispositif comprend un boîtier (1) incluant une portion de manche (2), un ensemble comprenant lesdits premier et second éléments de mâchoire (4, 5) et logé à coulissement à l'intérieur dudit boîtier (1), ledit ensemble pouvant coulisser entre une position rétractée dans laquelle lesdites mâchoires (4, 5) sont fermées pour recevoir un élément de fixation (8), et une position déployée dans laquelle lesdites mâchoires (4, 5) peuvent être pivotées entre la position fermée et la position ouverte, ledit dispositif comprenant en outre un moyen d'actionnement (14) actionnable à la main pour effectuer le mouvement de coulissement dudit ensemble et pour effectuer le mouvement de pivotement des mâchoires (4, 5) dans la position déployée de l'ensemble, et un magasin (9) adapté pour tenir une pluralité desdits éléments de fixation (8) et pour positionner lesdits éléments (8) pour les introduire dans lesdites mâchoires (4, 5) lorsque ledit ensemble est dans sa position rétractée.

2. Dispositif selon la revendication 1, dans lequel ledit magasin (9) comprend une portion en collier (32) qui est connectée de manière détachable à une extrémité antérieure dudit boîtier (1), et un corps tubulaire allongé (38) s'étendant à partir dudit collier (32) sensiblement à angle droit par rapport au plan de pivotement desdites mâchoires (4, 5).

3. Dispositif selon la revendication 2, dans lequel ledit corps tubulaire (38) a une arête (10) s'étendant le long de la longueur de son intérieur et adaptée pour coopérer avec des dents correspondantes formées dans les éléments de fixation (8).

4. Dispositif selon la revendication 2 ou la revendication 3, dans lequel ladite portion en collier (32) est un moyen d'encliquetage avec une première et une seconde griffe flexible (34, 36) s'étendant depuis ladite extrémité antérieure dudit boîtier (1).

5. Dispositif selon l'une quelconque des revendications précédentes, dans lequel ledit ensemble est repoussé vers sa position rétractée par des moyens de poussée élastiques (18).

6. Dispositif selon la revendication 5, dans lequel ledit moyen de poussée élastique (18) comprend un élément élastique allongé ayant une première extrémité attachée audit second élément de mâchoire (5) et une seconde extrémité attachée à l'intérieur dudit boîtier (1).

7. Dispositif selon l'une quelconque des revendications précédentes, dans lequel ledit élément d'actionnement (14) est connecté audit premier élément de mâchoire (4) et s'étend à partir de lui à travers une fente (16) dans le côté dudit boîtier (1).

8. Dispositif selon la revendication 7, dans lequel ledit élément d'actionnement (14) est adapté pour être manoeuvré par le pouce d'une main saisissant la portion de manche (2).

9. Dispositif selon l'une quelconque des revendications précédentes, comprenant un moyen de verrouillage (22) pour verrouiller ledit ensemble dans ladite position déployée.

10. Dispositif selon la revendication 9, dans lequel ledit moyen de verrouillage (22) peut être relâché, lorsque verrouillé, par le fonctionnement dudit élément d'actionnement (14).

11. Dispositif selon la revendication 9 ou la revendication 10, dans lequel ledit élément de verrouillage (22) comprend une portion en queue (24) dudit second élément de mâchoire (5) s'étendant vers l'arrière à l'intérieur du boîtier (1) et adaptée pour s'engager avec une partie coopérante dudit boîtier (1) lorsque ledit ensemble est dans ladite position déployée.

12. Dispositif selon l'une quelconque des revendications précédentes, adapté pour un usage avec des éléments de fixation (8) à forme générale en C, dans lequel les extrémités extérieures desdits éléments de mâchoire (4, 5) sont chacune pourvues d'une épaule (6, 7) ayant sur elle une projection vers le haut.
